# EUROPÄISCHE PATENTSCHRIFT

(11) **EP 2 034 293 B1**
(45) Veröffentlichungstag und Bekanntmachung des Hinweises auf die Patenterteilung: **21.10.2009**
(21) Anmeldenummer: 07017650.8
(22) Anmeldetag: 10.09.2007
(51) Int. Cl.: G01N 21/25, G01N 21/86

(54) **Verfahren und Vorrichtung zum Auswerten eines trockenchemischen Testelementes**
Method and device for evaluating a dry chemical test element
Procédé et dispositif destinés à l'évaluation d'un élément test chimique sec

(43) Veröffentlichungstag der Anmeldung: 11.03.2009
(73) Patentinhaber: F. Hoffmann-La Roche AG, 4070 Basel (CH); Roche Diagnostics GmbH, 68305 Mannheim (DE)
(72) Erfinder: Händler, Erich, 68623 Lampertheim (DE); Effenhauser, Carlo, 69469 Weinheim (DE); Oranth, Norbert, 68493 Hirschberg (DE)
(74) Vertreter: Bittner, Thomas L.

(56) Entgegenhaltungen:
- DE-A1- 2 613 617
- US-A1- 2006 077 392

## Beschreibung

Die Erfindung bezieht sich auf ein Verfahren und eine Vorrichtung zum Auswerten eines trockenchemischen Testelementes, insbesondere eines immunologischen Testelementes.

### Hintergrund der Erfindung

Derartige Technologien werden genutzt, um einen oder mehrere Analyte zu untersuchen, mit denen das trockenchemische Testelement beladen ist. Hierzu sind auf dem Testelement mehrere Untersuchungsbereiche gebildet, beispielsweise in Form von Streifen oder anderen Flächen wie Kreis oder Viereck, in denen sich das eine oder die mehreren Analyte nach dem Aufbringen einer Menge einer zu untersuchenden Flüssigkeitsprobe sammeln (vgl. beispielsweise US 6,707,554 B1). Üblicherweise sind die Analyte direkt gelabelt und hierdurch für eine anschließende optische Auswertung des trockenchemischen Testelementes vorbereitet. Gegebenenfalls kann die Aufbereitung des trockenchemischen Testelementes auch das Spülen oder Waschen mit einer Puffer-, einer Verdünnungs- oder einer Waschlösung umfassen. Schließlich kann das trockenchemische Testelement dann mittels optischen Abtasten ausgewertet werden, um insbesondere das Auftreten eines oder mehrerer bestimmter Analyte in den Untersuchungsbereichen des Testelementes festzustellen.

Beim optischen Abtasten, was auch als optisches Scannen bezeichnet wird, werden Messlichtstrahlen, welche in den abgetasteten Untersuchungsbereichen entstehen, nach dem Verlassen der Untersuchungsbereiche mit einer Detektoreinrichtung erfasst. Die Messlichtstrahlen können erzeugt werden, indem Testlichtstrahlen, die ihrerseits von einer geeigneten monochromatischen oder polychromatischen Lichtquelle erzeugt werden, auf die mit zu messenden, optisch aktiven Substanzen beladenen Untersuchungsbereiche eingestrahlt werden. In den Untersuchungsbereichen wechselwirkt dann das Licht der Testlichtstrahlen mit den optisch aktiven Substanzen, so dass sich eine entsprechende Änderung der optischen Eigenschaften der Testlichtstrahlen ergibt, welche den Untersuchungsbereich dann als Messlichtstrahlen verlassen. Beim Einstrahlen von Testlicht können als optische Eigenschaften der Messlichtstrahlen die Transmission, die Reflexion oder auch die Fluoreszenz untersucht werden. Messlichtstrahlen können darüber hinaus auf einer Lumineszenz der optisch aktiven Substanzen in den Untersuchungsbereichen beruhen.

Eine Messlichtintensität, mit welcher die Messlichtstrahlen einen jeweiligen Untersuchungsbereich verlassen, kann für die analysierten Untersuchungsbereiche verschieden sein. Beispielsweise kann ein in den jeweiligen Untersuchungsbereich mittels der Testlichtstrahlen erzeugtes Fluoreszenzlicht mit unterschiedlicher Intensität abgestrahlt werden, was zum Beispiel ein Indikator für die Höhe einer Konzentration eines zu messenden Analyts sein kann. Die Intensität von transmittiertem Messlicht hängt unter anderem von dem Umfang der optischen Absorption in dem beobachteten Untersuchungsbereich ab. Beim Untersuchen mittels Fluoreszenz hängt deren Ausmaß unter Anderem auch von der Konzentration der fluoreszierenden Moleküle ab.

Beim optischen Abtasten des trockenchemischen Testelementes können beispielsweise das Testelement und die Detektoreinrichtung, mit welcher die Messlichtstrahlen erfasst werden, oder das Testelement und die Lichtquelle relativ zueinander verlagert, um so Untersuchungsbereich nach Untersuchungsbereich optisch zu analysieren. Dem bekannten Vorgehen beim optischen Abtasten oder Scannen entsprechend werden vor dem Beginn des Abtastvorganges bestimmte Abtastparameter eingestellt, mit denen dann ein Scan durchgeführt wird. Üblicherweise werden eine konstante Abtast- oder Scangeschwindigkeit und eine Belichtungszeit für die Detektoreinrichtung eingestellt. Wenn nun die Messlichtstrahlen von den Untersuchungsbereichen auf dem trockenchemischen Testelement mit unterschiedlicher Intensität abgegeben werden, entsteht das Problem, dass in Bereichen mit geringer Messlichtintensität, was üblicherweise einer niedrigen Konzentration des zu messenden Analyten entspricht, unter Umständen die Abtastgeschwindigkeit zu hoch ist, um tatsächlich ein auswertbares detektiertes Signal zu erfassen. In anderen Bereichen mit hoher Analytkonzentration kann die Lichtintensität der den Untersuchungsbereich verlassenden Messlichtstrahlen wiederum so hoch sein, dass bei der voreingestellten Abtastgeschwindigkeit ein Übersteuern der Detektoreinrichtung auftritt.

Die US 2006/0077392 A offenbart ein Verfahren zum Auswerten eines trockenchemischen Testelements mit zwei oder mehr Untersuchungsbereichen, wobei in einem ersten Schritt erste Untersuchungsbereiche zweier trockenchemischer Testelemente von einer ersten LED beleuchtet werden und die von den ersten Untersuchungsbereichen diffus reflektierte Strahlung von zwei den Untersuchungsbereichen jeweils zugeordneten Detektoren detektiert wird und in einem zweiten Schritt zweite Untersuchungsbereiche der Testelemente von einer zweiten LED beleuchtet werden und die von den zweiten Untersuchungsbereichen diffus reflektierte Strahlung von den Detektoren detektiert wird. Bei beiden Schritten wird ausserdem ein Teil der von den LEDs emittierten Strahlung von einem Referenzdetektor detektiert, um mittels einer Kontrollschleife die Intensität der von den LEDs abgestrahlten Strahlung elektronisch zu steuern. Variationen der Reflexionseigenschaften der Untersuchungsbereiche werden bei dieser Steuerung der LEDs nicht berücksichtigt.

Die DE 26 13 617 A beschreibt ein Verfahren zum Auswerten eines trockenchemischen Testelements mit zwei oder mehr Farbreaktions-Testpapier-Stücken und einem Reflexionskompensations-Stück, wobei eine zu untersuchende Probe mit den Farbreaktions-Testpapier-Stücken und mit dem Reflexionskompensations-Stück in Kontakt gebracht wird. Dann wird zunächst das Reflexionskompensations-Stück beleuchtet, die diffuse Reflexion detektiert und die Empfindlichkeit der Detektoreinrichtung mittels eines Empfindlichkeitseinstellschaltkreises auf 100% justiert. Anschließend wird die diffuse Reflexion der Farbreaktions-Testpapier-Stücke relativ zu der auf 100% festgelegten Reflexion des Reflexionskompensations-Stücks detektiert. Es findet keine Anpassung der Empfindlichkeit an die von den Farbreaktions-Testpapier-Stücken reflektierte Strahlung statt.

### Zusammenfassung der Erfindung

Aufgabe der Erfindung ist es, ein Verfahren und eine Vorrichtung zum Auswerten eines trockenchemischen Testelementes zu schaffen, bei denen ein optimiertes Auswerten mittels optischen Abtasten oder Scannen ermöglicht ist, auch wenn mit zu messenden, optisch aktiven Substanzen beladene Untersuchungsbereiche des Testelementes eine unterschiedliche optische Aktivität aufweisen.

Diese Aufgabe wird erfindungsgemäß durch ein Verfahren zum Auswerten eines trockenchemischen Testelementes nach dem unabhängigen Anspruch 1 und einer Vorrichtung zum Auswerten eines trockenchemischen Testelementes nach dem unabhängigen Anspruch 12 gelöst. Weiterhin ist die Verwendung des Verfahrens oder der Vorrichtung zum Ausführen eines medizindiagnostischen Tests vorgesehen. Vorteilhafte Ausgestaltungen der Erfindung sind Gegenstand von abhängigen Unteransprüchen.

Nach einem Aspekt der Erfindung ist ein Verfahren zum Auswerten eines trockenchemischen Testelementes, insbesondere eines immunologischen Testelementes, vorgesehen, bei dem ein trockenchemisches Testelement mittels optischen Abtasten ausgewertet wird, indem Untersuchungsbereiche des Testelementes, welche mit einer oder mehreren immobilisierte, optisch aktiven Substanzen beladen sind, mit einer jeweiligen Messlichtintensität verlassende Messlichtstrahlen mittels einer Detektoreinrichtung erfasst werden, wobei das Verfahren die folgenden Schritte umfasst: Beim optischen Abtasten eines ersten Untersuchungsbereiches, den die Messlichtstrahlen mit einer ersten Messlichtintensität verlassen, werden eine erste auf die Detektoreinrichtung einfallende Lichtmenge von Messlichtstrahlen und ein Arbeitsbereich der Detektoreinrichtung einander angepasst, indem Abtastparameter gemäß eines ersten Satzes von Abtastparametern gewählt werden, und beim optischen Abtasten eines zweiten Untersuchungsbereiches, den die Messlichtstrahlen mit einer zweiten und sich von der ersten Messlichtintensität unterscheidenden Messlichtintensität verlassen, werden eine zweite auf die Detektoreinrichtung einfallende Lichtmenge von Messlichtstrahlen und der Arbeitsbereich der Detektoreinrichtung einander angepasst, indem Abtastparameter gemäß eines zweiten Satzes von Abtastparametern gewählt werden, welcher sich von dem ersten Satz von Abtastparametern unterscheidet.

Nach einem weiteren Aspekt der Erfindung ist eine Vorrichtung zum Auswerten eines trockenchemischen Testelementes, insbesondere eines immunologischen Testelementes, mittels optischen Abtasten geschaffen, wobei die Vorrichtung die folgenden Merkmale aufweist: eine Aufnahme, die konfiguriert ist, ein trockenchemisches Testelement zum Auswerten mittels optischen Abtasten aufzunehmen, eine Detektoreinrichtung, die konfiguriert ist, Untersuchungsbereiche, welche mit einem oder mehreren immobilisierten, optisch aktiven Substanzen beladen sind, mit einer jeweiligen Messlichtintensität verlassende Messlichtstrahlen zu erfassen, und eine Steuereinrichtung, die konfiguriert ist, das optische Abtasten des trockenchemischen Testelementes wie folgt zu steuern: Beim optischen Abtasten eines ersten Untersuchungsbereiches, den die Messlichtstrahlen mit einer ersten Messlichtintensität verlassen, werden eine erste auf die Detektoreinrichtung einfallende Lichtmenge von Messlichtstrahlen und ein Arbeitsbereich der Detektoreinrichtung einander angepasst, indem Abtastparameter gemäß eines ersten Satzes von Abtastparametern gewählt werden, und beim optischen Abtasten eines zweiten Untersuchungsbereiches, den die Messlichtstrahlen mit einer zweiten und sich von der ersten Messlichtintensität unterscheidenden Messlichtintensität verlassen, werden eine zweite auf die Detektoreinrichtung einfallende Lichtmenge von Messlichtstrahlen und der Arbeitsbereich der Detektoreinrichtung einander angepasst, indem Abtastparameter gemäß eines zweiten Satzes von Abtastparametern gewählt werden, welcher sich von dem ersten Satz von Abtastparametern unterscheidet.

Mit der Erfindung ist die Möglichkeit geschaffen, während eines Abtast- oder Scanvorgangs zum Auswerten des trockenchemischen Testelementes die optischen Abtasteigenschaften des verwendeten Messsystems, insbesondere der optischen Komponenten, individuell an die optische Aktivität eines gerade untersuchten Untersuchungsbereiches anzupassen. Die auf die Detektoreinrichtung einfallende Lichtmenge von Messlichtstrahlen wird so gesteuert, dass der Detektor stets in seinem vorgegebenen Arbeitsbereich arbeitet. Ein solcher Arbeitsbereich ist für Detektoreinrichtungen, zum Beispiel Photodioden, flächige Anordnungen von Photodioden oder Photovervielfacher (Photomultiplier), üblicherweise vorgegeben und kann wahlweise mit Hilfe einer geeigneten elektronischen Beschaltung des Detektors eingestellt werden. Für den Arbeitsbereich der Detektoreinrichtung, bei dem es sich üblicherweise um einen Bereich handelt, in welchem das mittels des Detektors erzeugte elektrische Signal linear von der einfallenden Lichtmenge abhängt, zeigt die Detektoreinrichtung ein eindeutiges und reproduzierbares Verhalten. Liegt die auf einer Detektorfläche einfallende Lichtmenge außerhalb des auch als Dynamikbereich bezeichneten Arbeitsbereiches des Detektors ist üblicherweise wegen zu geringer einfallender Lichtmenge kein Ausgangssignal zu beobachten oder der Detektor wird übersteuert, was zu Sättigungseffekten oder Nichtlinearitäten führt. In diesem Fall ist ein elektrisches Ausgangssignal, sofern es überhaupt vom Detektorrauschen unterschieden werden kann, für die Analyse der Untersuchung schwer oder gar nicht auswertbar. Dem Arbeitsbereich der Detektoreinrichtung können gegebenenfalls auch nichtlineare Bereiche zugeordnet werden, sofern hierfür eine reproduzierbare Antwortfunktion der Detektoreinrichtung bekannt ist, die eine Auswertung des erzeugten elektrischen Ausgangssignals erlaubt.

Die Messlichtstrahlen können insbesondere in Form transmittierter Lichtstrahlen, reflektierter Lichtstrahlen, gestreuter Lichtstrahlen oder emittierter Lichtstrahlen detektiert werden. Die Wahl, welche und wie viele optische Eigenschaften ausgewertet werden, kann je nach Anwendungsfall unter Berücksichtigung der Eigenschaften des trockenchemischen Testelementes mit den zu untersuchenden Analyten getroffen werden. Transmittierte, reflektierte oder gestreute Lichtstrahlen entstehen hierbei dadurch, dass Testlichtstrahlen auf den Untersuchungsbereich eingestrahlt werden und diese in dem Untersuchungsbereich mit den immobilisierten, optisch aktiven Substanzen wechselwirken, wodurch entsprechend geänderte Messlichtstrahlen entstehen. Aber auch emittierte Lichtstrahlen können bei dieser Art des optischen Abtastens erzeugt werden, nämlich in Form von Fluoreszenz- oder Phosphoreszenzlicht. Darüber hinaus kann das optische Abtasten die Erfassung von emittierten Lichtstrahlen aus dem Untersuchungsbereich oder den Untersuchungsbereichen umfassen, die ihrerseits das Ergebnis einer Biolumineszenz, einer Chemolumineszenz oder einer Elektrochemolumineszenz sind. Bei der Bio- oder der Chemolumineszenz werden Substanzen zugegeben, die das Emittieren von Lichtstrahlen in Form von Lumineszenz durch die optisch aktiven Substanzen in den Untersuchungsbereichen auslösen. Demgegenüber basiert die Elektrochemolumineszenz darauf, die Untersuchungsbereiche des trockenchemischen Testelementes mit elektrischer Energie zu beaufschlagen, um Lumineszenz der optisch aktiven Substanzen zu erzeugen. Bei dieser Ausgestaltung des Verfahrens sind geeignete Mittel zur Beaufschlagung der Untersuchungsbereiche mit elektrischer Energie vorgesehen, beispielsweise ein oder mehrere Elektroden.

Die optisch aktiven Substanzen sind das Ergebnis einer Reaktion eines oder mehrere Reagenzien, die auf dem Testelement immobilisiert sind, wobei es sich bei der Reaktion um eine Bindungsreaktion oder eine chemische Reaktion handeln kann. Aufgrund der Reaktion, welche im Laufe der Vorbereitung des Testelementes für den optischen Abtastvorgang stattfindet, entstehen die optisch aktiven Substanzen mit optisch abtastbaren Eigenschaften. Bei der Bindungsreaktion kann es sich beispielsweise um eine immunologische Bindungsreaktion oder eine Hybridisierungsreaktion handeln. Solche Reaktionen oder chemische Reaktionen können auch mehrfach auftreten. Mit Hilfe einer oder mehrerer Bindungsreaktionen können ein oder mehrere auf dem Testelement immobilisierte Reagenzien indirekt gelabelt werden. Die Anwesenheit eines oder mehrerer Reagenzien kann auch die Bindung von gelabelten Reagenzien verhindern.

Zum Übergang zwischen den Abtastparametern gemäß des ersten Satzes von Abtastparametern zu den Abtastparametern gemäß des zweiten Satzes von Abtastparametern können ein oder mehrere Maßnahmen vorgesehen sein, um die auf die Detektoreinrichtung einfallende Lichtmenge von Messlichtstrahlen in beiden Fällen dem Arbeitsbereich der Detektoreinrichtung entsprechend einzustellen. Hierzu gehören beispielsweise auch das Einführen oder Entfernen von optischen Filtern in den Weg der Messlichtstrahlen zu der Detektoreinrichtung. Auch die Verwendung von Blenden kann beispielsweise vorgesehen sein.

Grundsätzlich können beliebige Maßnahmen genutzt werden, die eine Anpassung der auf die Detektoreinrichtung anfallenden Lichtmenge an den Arbeitsbereich der Detektoreinrichtung ermöglichen. Hierbei kann in einer Ausgestaltung auch vorgesehen sein, unter Ausnutzung einer elektronischen Beschaltung der Detektoreinrichtung den Arbeitsbereich zu verschieben, um so wiederum eine Anpassung zwischen einfallender Lichtmenge und Arbeitsbereich zu erreichen. Beispielsweise kann in diesem Zusammenhang ein Verstärkungsfaktor verändert werden. Der Eingriff hinsichtlich des Arbeitsbereiches der Detektoreinrichtung kann alternativ oder ergänzend zu den Maßnahmen für die Beeinflussung der auf die Detektoreinrichtung einfallenden Lichtmenge erfolgen. Die Arbeitsbereichsanpassung der Detektoreinrichtung ist insoweit Teil der Abtastparameter für den zugeordneten Abtastvorgang.

Eine bevorzugte Weiterbildung der Erfindung sieht vor, dass als Abtastparameter eine oder mehrere Stellgrößen ausgewählt aus der folgenden Gruppe von Stellgrößen eingestellt werden: eine Abtastgeschwindigkeit, eine Belichtungszeit, eine Testlichtintensität von Testlichtstrahlen, ein Verstärkungsfaktor der Detektoreinrichtung und eine Beauschlagung der Untersuchungsbereiche mit elektrischer Energie. Die Abtast- oder Scangeschwindigkeit betrifft die Geschwindigkeit, mit welcher das trockenchemische Testelement mit den hierauf gebildeten Untersuchungsbereichen einerseits und die Abtastvorrichtung, welche insbesondere die Detektoreinrichtung umfasst, andererseits relativ zueinander bewegt werden. Alternativ oder ergänzend kann bei der Nutzung von Testlichtstrahlen die Geschwindigkeit eingestellt werden, mit welcher die Testlichtstrahlen die Untersuchungsbereiche überstreichen. Mittels dieser Maßnahmen ergibt sich für jeden Untersuchungsbereich eine zugeordnete Abtastzeit, in welcher für den jeweiligen Untersuchungsbereich mit der Detektoreinrichtung Messlichtstrahlen erfasst werden. Ist die Messlichtintensität der den Untersuchungsbereich verlassenden Messlichtstrahlen relativ gering, was üblicherweise eine geringe Analytkonzentration anzeigt, kann die Abtastgeschwindigkeit entsprechend gering gewählt werden, um so eine ausreichende Lichtmenge von Messlichtstrahlen auf die Detektoreinrichtung einfallen zu lassen. Umgekehrt kann die Abtastgeschwindigkeit erhöht werden, wenn eine höhere Messlichtintensität für einen anderen Untersuchungsbereich festgestellt wird. Die Belichtungszeit ist der Zeitraum, in welchem für einen zugeordneten Untersuchungsbereich Messlichtstrahlen mit der Detektoreinrichtung erfasst werden. Diese wird zunächst natürlich durch die Abtastgeschwindigkeit beeinflusst. Darüber hinaus können optische Bauelemente zugeschaltet oder abgeschaltet werden, die eine Detektorfläche der Detektoreinrichtung für eine vorgegebene oder mehrere vorgegebene Zeiträume freigeben oder verdecken. Beispielsweise kann in diesem Zusammenhang eine schaltbare Blende vorgesehen sein. Aber auch die Lichtintensität, mit welcher die Testlichtstrahlen auf das auszuwertende trockenchemische Testelement eingestrahlt werden, beeinflusst üblicherweise die Intensität der Messlichtstrahlen. Auch dieser Abtastparameter kann deshalb angepasst werden.

Bei einer zweckmäßigen Ausgestaltung der Erfindung kann vorgesehen sein, dass wenigstens ein Abtastparameter für den ersten und den zweiten Satz von Abtastparametern konstant gehalten wird. Je weniger Abtastparameter bei dem Wechsel zwischen dem ersten und dem zweiten Satz von Abtastparametern zu verändern sind, umso schneller kann in der Regel der Übergang erfolgen.

Eine vorteilhafte Ausführungsform der Erfindung sieht vor, dass ein Wechsel von den Abtastparametern gemäß des ersten Satzes von Abtastparametern auf die Abtastparameter gemäß des zweiten Satzes von Abtastparametern im Verlauf eines fortgesetzten Abtastvorganges für das trockenchemische Testelement ausgeführt wird.

Bevorzugt sieht eine Fortbildung der Erfindung vor, dass der Wechsel von den Abtastparametern gemäß des ersten Satzes von Abtastparametern auf die Abtastparameter gemäß des zweiten Satzes von Abtastparametern in Abhängigkeit von Messinformationen erfolgt, die aus einem vorab durchgeführten Vorabtastvorgang abgeleitet werden. Der vorab durchgeführte Vorabtastvorgang liefert eine Information, über die optische Aktivität der einzelnen Untersuchungsbereiche auf dem trockenchemischen Testelement, sei es eine Information über absolute oder relative Messgrößen. Dieser Information entsprechend können dann die Sätze von Abtastparametern für die Untersuchungsbereiche eingestellt werden, um während des optischen Abtastens den oder die Wechsel entsprechend vorzunehmen. Der Vorabtastvorgang kann beispielsweise als ein schneller Scan ausgeführt werden. Darüber hinaus oder alternativ kann vorgesehen sein, den Vorabtastvorgang mit einer geringeren Auflösung auszuführen, als dieses dann für den folgenden Hauptscan eingestellt wird. Für den Vorabtastvorgang ist nicht notwendigerweise, dass dann tatsächlich zu untersuchende trockenchemische Testelement zu verwenden; auch ein Beispiel- oder Normaltestelement mit vergleichbarer Ausprägung der Untersuchungsbereiche kann verwendet werden.

Bei einer vorteilhaften Ausgestaltung der Erfindung kann vorgesehen sein, dass der Wechsel von den Abtastparametern gemäß des ersten Satzes von Abtastparametern auf die Abtastparameter gemäß des zweiten Satzes von Abtastparametern in Abhängigkeit von aktuellen Messinformationen erfolgt, die während des optischen Abtastens des trockenchemischen Testelementes aus aktuellen Messwerten abgeleitet werden. Aktuell und kurzfristig kann so während des Abtastens ein Übergang zwischen Sätzen von Abtastparametern veranlasst werden, auch wenn vorher schon ein bestimmtes Abtastverhalten eingestellt wurde.

Eine Weiterbildung der Erfindung kann vorsehen, dass beim optischen Abtasten des trockenchemischen Testelementes mehrfach zwischen den Abtastparametern gemäß des ersten Satzes von Abtastparametern und den Abtastparametern gemäß des zweiten Satzes von Abtastparametern gewechselt wird. Das mehrfache Wechseln zwischen Sätzen von Abtastparametern kann automatisch gemäß voreingestellter Steuerungsparameter erfolgen. Alternativ oder ergänzend hierzu kann ein mehrfacher Wechsel aber auch durch aktuelle Messinformationen veranlasst sein, die während des Scan- oder Abtastvorganges gewonnen werden.

Eine bevorzugte Weiterbildung der Erfindung sieht vor, dass der erste Untersuchungsbereich nach dem optischen Abtasten mit den Abtastparametern gemäß des ersten Satzes von Abtastparametern erneut optisch abgetastet wird mit den Abtastparametern gemäß des zweiten Satzes von Abtastparametern. Das erneute optische Abtasten des ersten Untersuchungsbereiches kann unmittelbar vor dem optischen Abtasten eines folgenden Untersuchungsbereiches ausgeführt werden. Aber auch ein erneutes Abtasten des ersten Untersuchungsbereiches nach Abschluss eines Scans des trockenchemischen Testelementes kann vorgesehen sein. In der Regel ist hierbei dann ein Zurückfahren zu dem ersten Untersuchungsbereich notwendig. Das erneute optische Scannen des ersten Untersuchungsbereiches kann beispielsweise dann ausgeführt werden, wenn festgestellt wird, dass mit dem ersten Satz von Abtastparametern kein oder ein nur ungenügend auswertbares Signal an der Detektoreinrichtung gewonnen wurde. Der erste Untersuchungsbereich wird dann erneut mit einem geänderten Satz von Abtastparametern untersucht.

Bei einer zweckmäßigen Ausgestaltung der Erfindung kann vorgesehen sein, dass den Untersuchungsbereichen jeweils zugeordnete Testlichteinstrahlbereiche beim optischen Abtasten der Untersuchungsbereiche sich nicht überlappend gebildet werden. Die Testlichteinstrahlbereiche ergeben sich als die Bereiche auf dem trockenchemischen Testelement, die in Verbindung mit dem zugeordneten Untersuchungsbereich beim Abtasten von Testlichtstrahlen überstrichen werden. In diesem Zusammenhang kann in einer Ausgestaltung vorgesehen sein, dass die Testlichteinstrahlbereiche direkt benachbart zueinander gebildet werden, so dass zwischen ihnen keine von einer Testlichteinstrahlung freie Bereiche entstehen.

Eine vorteilhafte Ausführungsform der Erfindung sieht vor, dass die erste Lichtmenge in einem ersten Teilbereich des Arbeitsbereiches und die zweite Lichtmenge in einem zweiten Teilbereich des Arbeitsbereiches liegend gewählt werden, welcher sich von dem ersten Teilbereich unterscheidet. Bevorzugt handelt es sich bei dem ersten Teilbereich und dem zweiten Teilbereich um einen unteren und einen oberen Teilbereich des Arbeitsbereiches. Auf diese Weise wird der Arbeits- oder Dynamikbereich der Detektoreinrichtung möglichst weitgehend ausgeschöpft.

Bevorzugt sieht eine Fortbildung der Erfindung vor, dass in einer Abtaststellung mehrere gleichartige Untersuchungsbereiche optisch abgetastet und flächenhaft aufgelöst erfasst werden. In Verbindung mit dieser Ausführungsform wird eine Detektoreinrichtung verwendet, die eine flächenhafte Auflösung der auf die Detektorfläche einfallenden Messlichtstrahlen erlaubt. Mit Hilfe dieser Verfahrensgestaltung sind beispielsweise mehrere Untersuchungsbereiche auch quer zur Abtast- oder Scanrichtung messbar.

Die beim optischen Abtasten gewonnen Bildinformationen können in den verschiedenen Verfahrensgestaltungen nach einem so genannten Stitching-Verfahren verarbeitet werden. Hierbei werden einzelnen Bilder zu einem Gesamtbild vereinigt, wobei zweckmäßigerweise mehrfach auftretende Bildinformationen wie Überlappungen eliminiert werden. Das Stitching kann mit Hilfe hierzu geeigneter Software-Tools durchgeführt werden, die als solche in unterschiedlichen Varianten verfügbar sind.

Bezüglich der Ausgestaltungen der Vorrichtung zum Auswerten eines trockenchemischen Testelementes gelten die in Verbindung mit zugehörigen Verfahrensvarianten gemachten Ausführungen entsprechend.

### Beschreibung bevorzugter Ausführungsbeispiele der Erfindung

Die Erfindung wird im folgenden anhand von bevorzugten Ausführungsbeispielen unter Bezugnahme auf Figuren einer Zeichnung näher erläutert. Hierbei zeigen:
- Fig. 1: eine schematische Darstellung einer Vorrichtung zum Auswerten eines trockenchemischen Testelementes,
- Fig. 2: Beispiele für trockenchemische Testelemente,
- Fig. 3: eine schematische Darstellung zur Erläuterung eines Abtastvorgangs,
- Fig. 4: eine schematische Darstellung eines trockenchemischen Testelementes mit mehreren quer zur Abtastvorrichtung angeordneten Untersuchungsbereichen und
- Fig. 5: eine schematische Darstellung eines Abtastvorgangs, bei dem auf einem trockenchemischen Testelement ein Untersuchungsbereich nach einem ersten Abtastvorgang erneut optisch abgetastet wird.

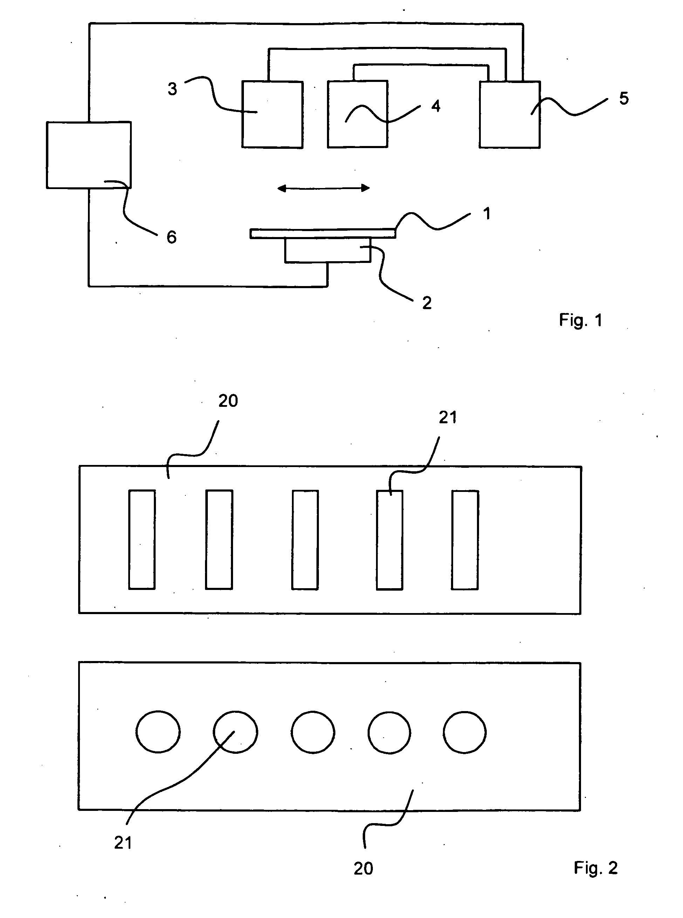

Fig. 1 zeigt eine schematische Darstellung einer Vorrichtung zum Auswerten eines trockenchemischen Testelementes 1 mittels optischen Abtasten oder Scannen. Das optische Auswerten des Testelementes 1 auf einer Unterlage 2, bei der es sich insbesondere um eine Aufnahme für das Testelement 1 handelt, dient zum analytischen Nachweis eines oder mehrerer optisch aktiver Substanzen, insbesondere zur medizinischen Diagnostik, die sich in Untersuchungsbereichen des Testelementes 1 befinden. Die optisch aktiven Substanzen sind das Ergebnis einer Reaktion eines oder mehrere Reagenzien, die auf dem Testelement 1 immobilisiert sind, wobei es sich bei der Reaktion um eine Bindungsreaktion oder eine chemische Reaktion handeln kann. Aufgrund der Reaktion, welche im Laufe der Vorbereitung des Testelementes für den optischen Abtastvorgang stattfindet, entstehen die optisch aktiven Substanzen mit optisch abtastbaren Eigenschaften. Bei der Bindungsreaktion kann es sich beispielsweise um eine immunologische Bindungsreaktion oder eine Hybridisierungsreaktion handeln. Solche Reaktionen oder chemische Reaktionen können auch mehrfach auftreten. Mit Hilfe einer oder mehrerer Bindungsreaktionen können ein oder mehrere auf dem Testelement 1 immobilisierte Reagenzien indirekt gelabelt werden. Die Anwesenheit eines oder mehrerer Reagenzien kann auch die Bindung von gelabelten Reagenzien verhindern.

Bei der dargestellten Ausführungsform werden zum optischen Abtasten von einer Messlichtquelle 3 Messlichtstrahlen auf das trockenchemische Testelement 1 eingestrahlt. Mit Hilfe einer Detektoreinrichtung 4 werden dann Messlichtstrahlen erfasst, die das trockenchemische Testelement 1 verlassen. Bei der optischen Untersuchung erfolgt eine Relativbewegung zwischen dem trockenchemischen Testelement 1 und einem oder mehreren der optischen Komponenten, insbesondere der Messtestlichtquelle 3 oder der Detektoreinrichtung 4. An die Detektoreinrichtung 4 und die Testlichtquelle 3 ist eine Steuereinrichtung 5 gekoppelt, welche dazu dient, während des optischen Abtastens für die unterschiedlichen Untersuchungsbereiche auf dem trockenchemischen Testelement 1 jeweils einen geeigneten Satz von Abtastparametern einzustellen. Zu diesem Zweck ist die Steuereinrichtung 5 auch an eine Verlagerungseinheit 6 gekoppelt, welche die Relativbewegung beim Scannen bewirkt.

Mit Hilfe der Steuereinrichtung 5 werden die Abtastparameter je nach Untersuchungsbereich auf dem trockenchemischen Testelement 1 so eingestellt, dass die auf die Detektoreinrichtung 4 einfallende Lichtmenge und ein Arbeitsbereich der Detektoreinrichtung 4 einander angepasst werden. Zu den einstellbaren Abtastparametern zählen insbesondere die Scangeschwindigkeit, die Belichtungszeit für die Detektoreinrichtung 4, die Intensität der Testlichtstrahlen sowie die Einstellung eines Verstärkungsfaktors der Detektoreinrichtung.

Fig. 2 zeigt eine schematische Darstellung für trockenchemische Testelemente, bei denen einem beispielsweise als Membran ausgeführten Substrat 20 mehrere Untersuchungsbereiche 21 gebildet sind. In den mehreren Untersuchungsbereichen 21 sind das oder die zu untersuchenden, optisch aktiven Substanzen "gefangen", also immobilisiert. Eine Bindung der optisch aktiven Substanzen in den Untersuchungsbereichen 21 erfolgt insbesondere mittels Antikörpern, die dann mit optisch aktiven Label- oder Markierungsmolekülen zusammenwirken. Die Intensität, in welcher Messlichtstrahlen die mehreren Untersuchungsbereiche 21 beim optischen Abtasten verlassen, ist dann ein Indikator dafür, in welchem Umfang ein oder mehrere optisch aktive Substanzen in einem der mehreren Untersuchungsbereiche 21 vorhanden ist.

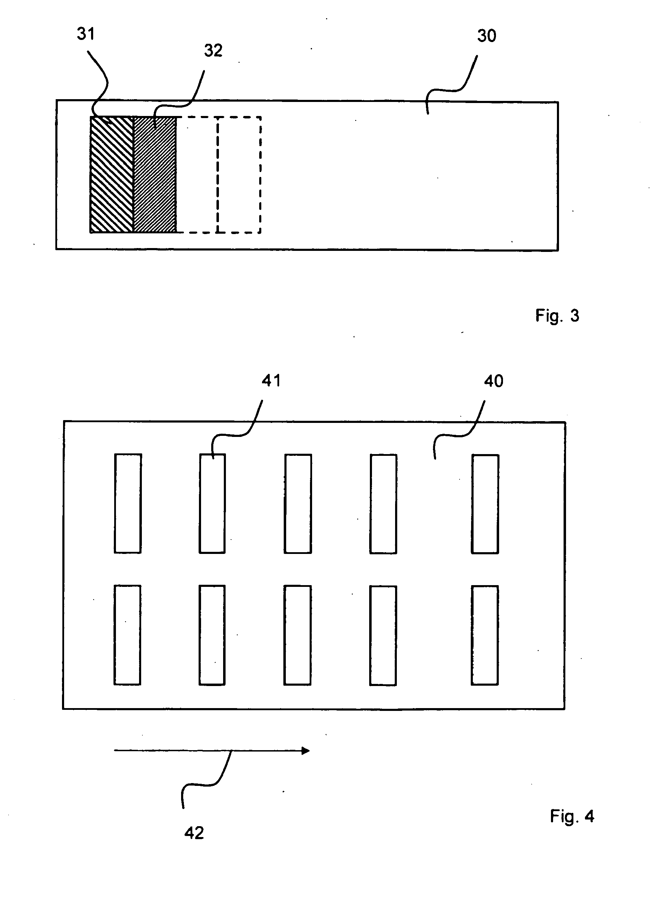

Fig. 3 zeigt eine schematische Darstellung zur Erläuterung eines Abtast- oder Scanvorgangs. Auf dem trockenchemischen Testelement 30 sind zwei Testlichteinstrahlbereiche 31, 32 schematisch dargestellt. Hierbei handelt es sich um die Bereiche auf dem trockenchemischen Testelement 30, die beim Abtasten eines jeweils zugeordneten Untersuchungsbereiches von den Testlichtstrahlen überstrichen werden. Es ergibt sich, dass die Testlichteinstrahlbereiche 31, 32 benachbart und nicht überlappend gebildet sind. Einer Ausführungsform entsprechend erfolgt das optische Scannen der beiden Testlichteinstrahlbereiche 30, 31 mit unterschiedlichen Sätzen von Abtastparametern, beispielsweise unterschiedlicher Abtast- oder Scangeschwindigkeit.

Fig. 4 zeigt eine schematische Darstellung eines trockenchemischen Testelementes 40, bei dem sich Untersuchungsbereiche 41 nicht nur entlang einer Abtast- oder Scanrichtung 42 sondern auch quer hierzu erstrecken. Bei einer geeigneten Detektoreinrichtung, beispielsweise einer flächigen Diodenanordnung, kann beim optischen Abtasten des trockenchemischen Testelementes 40 eine räumliche Auflösung auch quer zur Abtastrichtung 42 erfolgen. Zweckmäßiger Weise gehören übereinander angeordnete Untersuchungsbereiche 41 einer "gleichen Signalklasse" an, was bedeutet, dass sie Messlichtstrahlen mit gleicher oder ähnlicher Intensität abgeben und so mit einem gleichen Satz von Abtastparametern untersucht werden können.

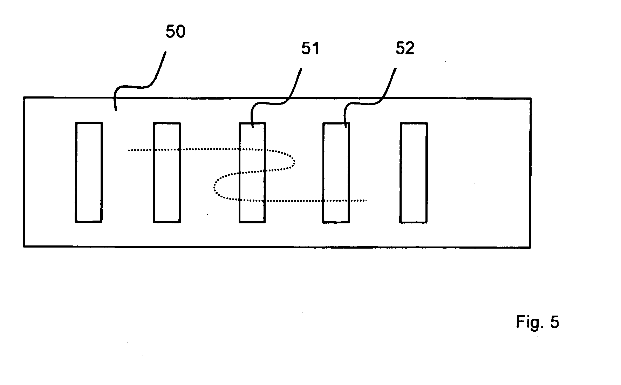

Fig. 5 zeigt eine schematische Darstellung eines Abtastvorgangs, bei dem auf einem trockenchemischen Testelement 50 ein Untersuchungsbereich 51 nach einem ersten Abtastvorgang erneut optisch abgetastet wird, bevor anschließend ein folgender Untersuchungsbereich 52 abgetastet wird. Auf diese Weise kann während des optischen Abtastens darauf reagiert werden, wenn beim Abtasten des Untersuchungsbereiches 51 festgestellt wird, dass die zunächst empfangene Lichtintensität nicht ausreicht, um an der Detektoreinrichtung ein auswertbares Signal zu erzeugen.

Vorangehend wurde das optische Abtasten unter Verwendung von Testlichtstrahlen beschrieben, die auf die Untersuchungsbereiche, in denen die zu untersuchenden und optisch aktiven Substanzen immobilisiert vorliegen, eingestrahlt werden, um auf diese Weise Messlichtstrahlen zu erzeugen, bei denen es sich insbesondere um transmittierte Lichtstrahlen, reflektierte Lichtstrahlen oder emittierte Lichtstrahlen handeln kann. Alternativ oder ergänzend kann bei der Untersuchung des trockenchemischen Testelementes 1 die Erzeugung von Messlichtstrahlen, die dann detektiert werden, auf einer Bio-, einer Chemo- oder einer Elektrochemolumineszenz beruhen. Die Einstellung eines Satzes von Abtastparametern kann dann entsprechend den vorangehend beschriebenen Ausführungen erfolgen.

## Patentansprüche

1. Verfahren zum Auswerten eines trockenchemischen Testelementes, insbesondere eines immunologischen Testelementes, bei dem ein trockenchemisches Testelement mittels optischen Abtasten ausgewertet wird, indem Untersuchungsbereiche (21; 41; 51) des Testelementes (1; 20; 30; 50), welche mit einem oder mehreren immobilisierten, optisch aktiven Substanzen beladen sind, mit einer jeweiligen Messlichtintensität verlassende Messlichtstrahlen mittels einer Detektoreinrichtung (4) erfasst werden, wobei das Verfahren die folgenden Schritte umfasst:
- Beim optischen Abtasten eines ersten Untersuchungsbereiches, den die Messlichtstrahlen mit einer ersten Messlichtintensität verlassen, werden eine erste auf die Detektoreinrichtung (4) einfallende Lichtmenge von Messlichtstrahlen und ein Arbeitsbereich der Detektoreinrichtung (4) einander angepasst, indem Abtastparameter gemäß eines ersten Satzes von Abtastparametern gewählt werden, und
- beim optischen Abtasten eines zweiten Untersuchungsbereiches, den die Messlichtstrahlen mit einer zweiten und sich von der ersten Messlichtintensität unterscheidenden Messlichtintensität verlassen, werden eine zweite auf die Detektoreinrichtung (4) einfallende Lichtmenge von Messlichtstrahlen und der Arbeitsbereich der Detektoreinrichtung (4) einander angepasst, indem Abtastparameter gemäß eines zweiten Satzes von Abtastparametern gewählt werden, welcher sich von dem ersten Satz von Abtastparametern unterscheidet.

2. Verfahren nach Anspruch 1, **dadurch gekennzeichnet, dass** als Abtastparameter eine oder mehrere Stellgrößen ausgewählt aus der folgenden Gruppe von Stellgrößen eingestellt werden: eine Abtastgeschwindigkeit, eine Belichtungszeit, eine Testlichtintensität der Testlichtstrahlen, ein Verstärkungsfaktor der Detektoreinrichtung (4) und eine Beaufschlagung der Untersuchungsbereiche (21; 41; 51) mit elektrischer Energie.

3. Verfahren nach Anspruch 1 oder 2, **dadurch gekennzeichnet, dass** wenigstens ein Abtastparameter für den ersten und den zweiten Satz von Abtastparametern konstant gehalten wird.

4. Verfahren nach einem der vorangehenden Ansprüche, **dadurch gekennzeichnet, dass** ein Wechsel von den Abtastparametern gemäß des ersten Satzes von Abtastparametern auf die Abtastparameter gemäß des zweiten Satzes von Abtastparametern im Verlauf eines fortgesetzten Abtastvorganges für das trockenchemische Testelement (1; 20; 30; 50) ausgeführt wird.

5. Verfahren nach einem der vorangehenden Ansprüche, **dadurch gekennzeichnet, dass** der Wechsel von den Abtastparametern gemäß des ersten Satzes von Abtastparametern auf die Abtastparameter gemäß des zweiten Satzes von Abtastparametern in Abhängigkeit von Messinformationen erfolgt, die aus einem vorab durchgeführten Vorabtastvorgang abgeleitet werden.

6. Verfahren nach einem der vorangehenden Ansprüche, **dadurch gekennzeichnet, dass** der Wechsel von den Abtastparametern gemäß des ersten Satzes von Abtastparametern auf die Abtastparameter gemäß des zweiten Satzes von Abtastparametern in Abhängigkeit von aktuellen Messinformationen erfolgt, die während des optischen Abtastens des trockenchemischen Testelementes (1; 20; 30; 50) aus aktuellen Messwerten abgeleitet werden.

7. Verfahren nach einem der vorangehenden Ansprüche, **dadurch gekennzeichnet, dass** beim optischen Abtasten des trockenchemischen Testelementes (1; 20; 30; 50) mehrfach zwischen den Abtastparametern gemäß des ersten Satzes von Abtastparametern und den Abtastparametern gemäß des zweiten Satzes von Abtastparametern gewechselt wird.

8. Verfahren nach einem der vorangehenden Ansprüche, **dadurch gekennzeichnet, dass** der erste Untersuchungsbereich nach dem optischen Abtasten mit den Abtastparametern gemäß des ersten Satzes von Abtastparametern erneut optisch abgetastet wird mit den Abtastparametern gemäß des zweiten Satzes von Abtastparametern.

9. Verfahren nach einem der vorangehenden Ansprüche, **dadurch gekennzeichnet, dass** den Untersuchungsbereichen (21; 41; 51) jeweils zugeordnete Testlichteinstrahlbereiche (31, 32) beim optischen Abtasten der Untersuchungsbereiche (21; 41; 51) sich nicht überlappend gebildet werden.

10. Verfahren nach einem der vorangehenden Ansprüche, **dadurch gekennzeichnet, dass** die erste Lichtmenge in einem ersten Teilbereich des Arbeitsbereiches und die zweite Lichtmenge in einem zweiten Teilbereich des Arbeitsbereiches liegend gewählt werden, welcher sich von dem ersten Teilbereich unterscheidet.

11. Verfahren nach einem der vorangehenden Ansprüche, **dadurch gekennzeichnet, dass** in einer Abtaststellung mehrere gleichartige Untersuchungsbereiche (41) optisch abgetastet und flächenhaft aufgelöst erfasst werden.

12. Vorrichtung zum Auswerten eines trockenchemischen Testelementes, insbesondere eines immunologischen Testelementes, mittels optischen Abtasten gemäß eines Verfahrens nach einem der vorangehenden Ansprüche, mit:
- einer Aufnahme (2), die konfiguriert ist, ein trockenchemisches Testelement (1; 20; 30; 50) zum Auswerten mittels optischen Abtasten aufzunehmen,
- einer Detektoreinrichtung (4), die konfiguriert ist, Untersuchungsbereiche (21; 41; 51) des Testelements, welche mit einem oder mehreren immobilisierten, optisch aktiven Substanzen beladen sind, mit einer jeweiligen Messlichtintensität verlassende Messlichtstrahlen zu erfassen, und
- einer Steuereinrichtung (5), die konfiguriert ist, das optische Abtasten des trockenchemischen Testelementes (1; 20; 30; 50) wie folgt zu steuern:
- Beim optischen Abtasten eines ersten Untersuchungsbereiches, den die Messlichtstrahlen mit einer ersten Messlichtintensität verlassen, werden eine erste auf die Detektoreinrichtung (4) einfallende Lichtmenge von Messlichtstrahlen und ein Arbeitsbereich der Detektoreinrichtung (4) einander angepasst, indem Abtastparameter gemäß eines ersten Satzes von Abtastparametern gewählt werden, und
- beim optischen Abtasten eines zweiten Untersuchungsbereiches, den die Messlichtstrahlen mit einer zweiten und sich von der ersten Messlichtintensität unterscheidenden Messlichtintensität verlassen, werden eine zweite auf die Detektoreinrichtung (4) einfallende Lichtmenge von Messlichtstrahlen und der Arbeitsbereich der Detektoreinrichtung (4) einander angepasst, indem Abtastparameter gemäß eines zweiten Satzes von Abtastparametern gewählt werden, welcher sich von dem ersten Satz von Abtastparametern unterscheidet.

13. Vorrichtung nach Anspruch 12, **dadurch gekennzeichnet, dass** die Steuereinrichtung (5) konfiguriert ist, als Abtastparameter eine oder mehrere Stellgrößen ausgewählt aus der folgenden Gruppe von Stellgrößen einzustellen: eine Abtastgeschwindigkeit, eine Belichtungszeit, eine Testlichtintensität der Testlichtstrahlen, ein Verstärkungsfaktor der Detektoreinrichtung (4) und eine Beaufschlagung der Untersuchungsbereiche (21; 41; 51) mit elektrischer Energie.

14. Vorrichtung nach Anspruch 12 oder 13, **dadurch gekennzeichnet, dass** die Steuereinrichtung (5) konfiguriert ist, wenigstens einen Abtastparameter für den ersten und den zweiten Satz von Abtastparametern konstant zu halten.

15. Vorrichtung nach einem der Ansprüche 12 bis 14, **dadurch gekennzeichnet, dass** die Steuereinrichtung (5) konfiguriert ist, einen Wechsel von den Abtastparametern gemäß des ersten Satzes von Abtastparametern auf die Abtastparameter gemäß des zweiten Satzes von Abtastparametern im Verlauf eines fortgesetzten Abtastvorganges für das trockenchemische Testelement (1; 20; 30; 50) auszuführen.

16. Vorrichtung nach einem der Ansprüche 12 bis 15, **dadurch gekennzeichnet, dass** die Steuereinrichtung (5) konfiguriert ist, den Wechsel von den Abtastparametern gemäß des ersten Satzes von Abtastparametern auf die Abtastparameter gemäß des zweiten Satzes von Abtastparametern in Abhängigkeit von Messinformationen zu veranlassen, die aus einem vorab durchgeführten Vorabtastvorgang abgeleitet werden.

17. Vorrichtung nach einem der Ansprüche 12 bis 16 **dadurch gekennzeichnet, dass** die Steuereinrichtung (5) konfiguriert ist, den Wechsel von den Abtastparametern gemäß des ersten Satzes von Abtastparametern auf die Abtastparameter gemäß des zweiten Satzes von Abtastparametern in Abhängigkeit von aktuellen Messinformationen zu veranlassen, die während des optischen Abtastens des trockenchemischen Testelementes (1; 20; 30; 50) aus aktuellen Messwerten abgeleitet werden.

18. Vorrichtung nach einem der Ansprüche 12 bis 17, **dadurch gekennzeichnet, dass** die Steuereinrichtung (5) konfiguriert ist, beim optischen Abtasten des trockenchemischen Testelementes (1; 20; 30; 50) mehrfach zwischen den Abtastparametern gemäß des ersten Satzes von Abtastparametern und den Abtastparametern gemäß des zweiten Satzes von Abtastparametern zu wechseln.

19. Vorrichtung nach einem der Ansprüche 12 bis 18, **dadurch gekennzeichnet, dass** die Steuereinrichtung (5) konfiguriert ist, den ersten Untersuchungsbereich nach dem optischen Abtasten mit den Abtastparametern gemäß des ersten Satzes von Abtastparametern erneut optisch abzutasten mit den Abtastparametern gemäß des zweiten Satzes von Abtastparametern.

20. Vorrichtung nach einem der Ansprüche 12 bis 19, **dadurch gekennzeichnet, dass** die Steuereinrichtung (5) konfiguriert ist, den Untersuchungsbereichen jeweils zugeordnete Testlichteinstrahlbereiche (31, 32) beim optischen Abtasten der Untersuchungsbereiche sich nicht überlappend zu bilden.

21. Vorrichtung nach einem der Ansprüche 12 bis 20, **dadurch gekennzeichnet, dass** die Steuereinrichtung (5) konfiguriert ist, die erste Lichtmenge in einem ersten Teilbereich des Arbeitsbereiches und die zweite Lichtmenge in einem zweiten Teilbereich des Arbeitsbereiches liegend zu wählen, welcher sich von dem ersten Teilbereich unterscheidet.

22. Vorrichtung nach einem der Ansprüche 12 bis 21, **dadurch gekennzeichnet, dass** die Steuereinrichtung (5) und die Detektoreinrichtung (4) konfiguriert sind, in einer Abtaststellung mehrere gleichartige Untersuchungsbereiche (41) optisch abzutasten und flächenhaft aufgelöst zu erfassen.

23. Vorrichtung nach einem der Ansprüche 12 bis 22, **gekennzeichnet durch** eine Lichtquelle (3), die konfiguriert ist, Testlichtstrahlen zu erzeugen und auf Untersuchungsbereiche (21; 41; 51) des trockenchemischen Testelementes (1; 20; 30; 50) in der Aufnahme (2) einzustrahlen.

24. Vorrichtung nach einem der Ansprüche 12 bis 23, **gekennzeichnet durch** eine Elektrodeneinrichtung, die an die Untersuchungsbereiche (21; 41; 51) koppelbar ist und konfiguriert ist, die Untersuchungsbereiche (21; 41; 51) des trockenchemischen Testelementes (1; 20; 30; 50) mit elektrischer Energie zu beaufschlagen.

25. Verwendung eines Verfahrens nach einem der Ansprüche 1 bis 11 oder einer Vorrichtung nach einem der Ansprüche 12 bis 24 zum Ausführen eines medizindiagnostischen Tests, insbesondere eines immunologischen Tests.

## Claims

1. A method for analysing a dry-chemical test element, in particular an immunological test element, in which a dry-chemical test element is analysed by means of optical scanning, whereby measurement light beams leaving assay regions (21; 41; 51) of the test element (1; 20; 30; 50), which are loaded with one or more immobilized optically active substances, with a respective measurement light intensity are detected by means of a detector device (4), wherein the method comprises the following steps:
- during the optical scanning of a first assay region, from which the measurement light beams leave with a first measurement light intensity, a first quantity of light from measurement light beams which impinges on the detector device (4) and a working range of the detector device (4) are adapted to one another by selecting scanning parameters according to a first set of scanning parameters, and
- during the optical scanning of a second assay region, from which the measurement light beams leave with a second measurement light intensity which differs from the first measurement light intensity, a second quantity of light from measurement light beams which impinges on the detector device (4) and the working range of the detector device (4) are adapted to one another by selecting scanning parameters according to a second set of scanning parameters which differs from the first set of scanning parameters.

2. The method according to claim 1, **characterized in that** one or more variables selected from the following group of variables are set as scanning parameters: a scanning speed, an exposure time, a test light intensity of the test light beams, an amplification factor of the detector device (4) and a supplying of the assay regions (21; 41; 51) with electrical energy.

3. The method according to claim 1 or 2, **characterized in that** at least one scanning parameter is kept constant for the first and the second set of scanning parameters.

4. The method according to one of the preceding claims, **characterized in that** a change from the scanning parameters according to the first set of scanning parameters to the scanning parameters according to the second set of scanning parameters is carried out in the course of a continued scanning process for the dry-chemical test element (1; 20; 30; 50).

5. The method according to one of the preceding claims, **characterized in that** the change from the scanning parameters according to the first set of scanning parameters to the scanning parameters according to the second set of scanning parameters takes place as a function of measurement information which is derived from a pre-scanning process carried out beforehand.

6. The method according to one of the preceding claims, **characterized in that** the change from the scanning parameters according to the first set of scanning parameters to the scanning parameters according to the second set of scanning parameters takes place as a function of current measurement information which is derived from current measured values during the optical scanning of the dry-chemical test element (1; 20; 30; 50).

7. The method according to one of the preceding claims, **characterized in that** a changeover between the scanning parameters according to the first set of scanning parameters and the scanning parameters according to the second set of scanning parameters takes place multiple times during the optical scanning of the dry-chemical test element (1; 20; 30; 50).

8. The method according to one of the preceding claims, **characterized in that** the first assay region, after the optical scanning with the scanning parameters according to the first set of scanning parameters, is optically scanned again with the scanning parameters according to the second set of scanning parameters.

9. The method according to one of the preceding claims, **characterized in that** test light application regions (31, 32), which are respectively assigned to the assay regions (21; 41; 51), are formed in such a way as not to overlap during the optical scanning of the assay regions (21; 41; 51).

10. The method according to one of the preceding claims, **characterized in that** the first quantity of light is selected to lie in a first sub-range of the working range and the second quantity of light is selected to lie in a second sub-range of the working range which differs from the first sub-range.

11. The method according to one of the preceding claims, **characterized in that** a plurality of identical assay regions (41) are optically scanned in one scanning position and are detected in a two-dimensionally resolved manner.

12. An apparatus for analysing a dry-chemical test element, in particular an immunological test element, by means of optical scanning using a method according to one of the preceding claims, comprising:
- a holder (2) which is configured to hold a dry-chemical test element (1; 20; 30; 50) for analysis by means of optical scanning,
- a detector device (4) which is configured to detect measurement light beams leaving assay regions (21; 41; 51) of the test element, which are loaded with one or more immobilized optically active substances, with a respective measurement light intensity, and
- a control device (5) which is configured to control the optical scanning of the dry-chemical test element (1; 20; 30; 50) as follows:
- during the optical scanning of a first assay region, from which the measurement light beams leave with a first measurement light intensity, a first quantity of light from measurement light beams which impinges on the detector device (4) and a working range of the detector device (4) are adapted to one another by selecting scanning parameters according to a first set of scanning parameters, and
- during the optical scanning of a second assay region, from which the measurement light beams leave with a second measurement light intensity which differs from the first measurement light intensity, a second quantity of light from measurement light beams which impinges on the detector device (4) and the working range of the detector device (4) are adapted to one another by selecting scanning parameters according to a second set of scanning parameters which differs from the first set of scanning parameters.

13. The apparatus according to claim 12, **characterized in that** the control device (5) is configured to set as scanning parameters one or more variables selected from the following group of variables: a scanning speed, an exposure time, a test light intensity of the test light beams, an amplification factor of the detector device (4) and a supplying of the assay regions (21; 41; 51) with electrical energy.

14. The apparatus according to claim 12 or 13, **characterized in that** the control device (5) is configured to keep at least one scanning parameter constant for the first and the second set of scanning parameters.

15. The apparatus according to one of claims 12 to 14, **characterized in that** the control device (5) is configured to carry out a change from the scanning parameters according to the first set of scanning parameters to the scanning parameters according to the second set of scanning parameters in the course of a continued scanning process for the dry-chemical test element (1; 20; 30; 50).

16. The apparatus according to one of claims 12 to 15, **characterized in that** the control device (5) is configured to initiate the change from the scanning parameters according to the first set of scanning parameters to the scanning parameters according to the second set of scanning parameters as a function of measurement information which is derived from a pre-scanning process carried out beforehand.

17. The apparatus according to one of claims 12 to 16, **characterized in that** the control device (5) is configured to initiate the change from the scanning parameters according to the first set of scanning parameters to the scanning parameters according to the second set of scanning parameters as a function of current measurement information which is derived from current measured values during the optical scanning of the dry-chemical test element (1; 20; 30; 50).

18. The apparatus according to one of claims 12 to 17, **characterized in that** the control device (5) is configured to change multiple times between the scanning parameters according to the first set of scanning parameters and the scanning parameters according to the second set of scanning parameters during the optical scanning of the dry-chemical test element (1; 20; 30; 50).

19. The apparatus according to one of claims 12 to 18, **characterized in that** the control device (5) is configured to optically scan the first assay region again, after the optical scanning with the scanning parameters according to the first set of scanning parameters, with the scanning parameters according to the second set of scanning parameters.

20. The apparatus according to one of claims 12 to 19, **characterized in that** the control device (5) is configured to form test light application regions (31, 32), which are respectively assigned to the assay regions, in such a way that they do not overlap during the optical scanning of the assay regions.

21. The apparatus according to one of claims 12 to 20, **characterized in that** the control device (5) is configured to select the first quantity of light to lie in a first sub-range of the working range and to select the second quantity of light to lie in a second sub-range of the working range which differs from the first sub-range.

22. The apparatus according to one of claims 12 to 21, **characterized in that** the control device (5) and the detector device (4) are configured to optically scan in one scanning position a plurality of identical assay regions (41) and to detect them in a two-dimensionally resolved manner.

23. The apparatus according to one of claims 12 to 22, **characterized by** a light source (3) which is configured to produce test light beams and to apply said test light beams to assay regions (21; 41; 51) of the dry-chemical test element (1; 20; 30; 50) in the holder (2).

24. The apparatus according to one of claims 12 to 23, **characterized by** an electrode device which can be coupled to the assay regions (21; 41; 51) and is configured to supply electrical energy to the assay regions (21; 41; 51) of the dry-chemical test element (1; 20; 30; 50).

25. The use of a method according to one of claims 1 to 11 or of an apparatus according to one of claims 12 to 24 for carrying out a diagnostic medical test, in particular an immunological test.

## Revendications

1. Procédé pour l'exploitation d'un élément de test chimique sec, en particulier un élément de test immunologique, dans lequel un élément de test chimique sec est exploité par exploration optique en saisissant des zones d'analyse (21 ; 41 ; 51) de l'élément de test (1 ; 20 ; 30 ; 50), chargées d'une ou plusieurs substances actives optiques immobilisées, avec des rayons lumineux de mesure d'une intensité lumineuse de mesure chacune les quittant, au moyen d'un équipement détecteur (4), le procédé comprenant les étapes suivantes :
- lors de l'exploration optique d'une première zone d'analyse que quittent les rayons lumineux de mesure avec une première intensité lumineuse de mesure, une première quantité lumineuse de rayons lumineux de mesure incidents sur l'équipement détecteur (4) et une plage de travail de l'équipement détecteur (4) sont adaptées l'une à l'autre en choisissant des paramètres d'exploration conformes à un premier jeu de paramètres d'exploration, et
- lors de l'exploration optique d'une deuxième zone d'analyse que quittent les rayons lumineux de mesure avec une deuxième intensité lumineuse de mesure qui diffère de la première intensité lumineuse de mesure, une deuxième quantité lumineuse de rayons lumineux de mesure incidents sur l'équipement détecteur (4) et une plage de travail de l'équipement détecteur (4) sont adaptées l'une à l'autre en choisissant des paramètres d'exploration conformes à un deuxième jeu de paramètres d'exploration qui diffère du premier jeu de paramètres d'exploration.

2. Procédé selon la revendication 1, **caractérisé en ce que** l'on règle comme paramètres d'exploration une ou plusieurs grandeurs réglantes sélectionnées dans le groupe suivant de grandeurs réglantes : une vitesse d'exploration, une durée d'exposition à la lumière, une intensité lumineuse de test des rayons lumineux de test, un facteur d'amplification de l'équipement détecteur (4) et une alimentation des zones d'analyse (21 ; 41 ; 51) en énergie électrique.

3. Procédé selon la revendication 1 ou 2, **caractérisé en ce que** l'on maintient constants au moins un paramètre d'exploration pour le premier et le deuxième jeu de paramètres d'exploration.

4. Procédé selon l'une quelconque des revendications précédentes, **caractérisé en ce que** l'on passe des paramètres d'exploration conformes au premier jeu de paramètres d'exploration aux paramètres d'exploration conformes au deuxième jeu de paramètres d'exploration au cours d'une opération d'exploration continue pour l'élément de test chimique sec (1 ; 20 ; 30 ; 50).

5. Procédé selon l'une quelconque des revendications précédentes, **caractérisé en ce que** le passage des paramètres d'exploration conformes au premier jeu de paramètres d'exploration aux paramètres d'exploration conformes au deuxième jeu de paramètres d'exploration s'effectue en fonction d'informations de mesure dérivées d'une opération d'exploration préliminaire réalisée au préalable.

6. Procédé selon l'une quelconque des revendications précédentes, **caractérisé en ce que** le passage des paramètres d'exploration conformes au premier jeu de paramètres d'exploration aux paramètres d'exploration conformes au deuxième jeu de paramètres d'exploration s'effectue en fonction d'informations de mesure actuelles dérivées de valeurs de mesure actuelles lors de l'exploration optique de l'élément de test chimique sec (1 ; 20 ; 30 ; 50).

7. Procédé selon l'une quelconque des revendications précédentes, **caractérisé en ce que**, lors de l'exploration optique de l'élément de test chimique sec (1 ; 20 ; 30 ; 50), on passe à plusieurs reprises des paramètres d'exploration conformes au premier jeu de paramètres d'exploration aux paramètres d'exploration conformes au deuxième jeu de paramètres d'exploration et vice versa.

8. Procédé selon l'une quelconque des revendications précédentes,
**caractérisé en ce que**, après l'exploration optique avec les paramètres d'exploration conformes au premier jeu de paramètres d'exploration, la première zone d'analyse est de nouveau explorée avec les paramètres d'exploration conformes au deuxième jeu de paramètres d'exploration.

9. Procédé selon l'une quelconque des revendications précédentes, **caractérisé en ce que** sont formées lors de l'exploration optique des zones d'analyse (21 ; 41 ; 51) des zones d'incidence de rayons lumineux de test (31, 32) non chevauchantes affectées aux différentes zones d'analyse (21 ; 41 ; 51).

10. Procédé selon l'une quelconque des revendications précédentes, **caractérisé en ce que** la première quantité lumineuse est choisie dans une première plage partielle de la plage de travail et la deuxième quantité lumineuse dans une première plage partielle de la plage de travail qui diffère de la première plage partielle.

11. Procédé selon l'une quelconque des revendications précédentes, **caractérisé en ce que**, dans une position d'exploration, plusieurs zones d'analyse (41) similaires sont explorées optiquement et saisies en surfaces restituées.

12. Dispositif pour l'exploitation d'un élément de test chimique sec, en particulier un élément de test immunologique, par exploration optique conformément à un procédé selon l'une quelconque des revendications précédentes, avec :
- un logement (2) configuré de manière à loger un élément de test chimique sec (1 ; 20 ; 30 ; 50) pour l'exploitation par exploration optique,
- un équipement détecteur (4) configuré de manière à saisir des zones d'analyse (21 ; 41 ; 51) de l'élément de test, qui sont chargées d'une ou plusieurs substances actives optiques immobilisées, avec des rayons lumineux de mesure d'une intensité lumineuse de mesure chacune les quittant, et
- un équipement de commande (5) configuré de manière à commander l'exploration optique de l'élément de test chimique sec (1 ; 20 ; 30 ; 50) comme suit :
- lors de l'exploration optique d'une première zone d'analyse que quittent les rayons lumineux de mesure avec une première intensité lumineuse de mesure, une première quantité lumineuse de rayons lumineux de mesure incidents sur l'équipement détecteur (4) et une plage de travail de l'équipement détecteur (4) sont adaptées l'une à l'autre en choisissant des paramètres d'exploration conformes à un premier jeu de paramètres d'exploration, et
- lors de l'exploration optique d'une deuxième zone d'analyse que quittent les rayons lumineux de mesure avec une deuxième intensité lumineuse de mesure qui diffère de la première intensité lumineuse de mesure, une deuxième quantité lumineuse de rayons lumineux de mesure incidents sur l'équipement détecteur (4) et une plage de travail de l'équipement détecteur (4) sont adaptées l'une à l'autre en choisissant des paramètres d'exploration conformes à un deuxième jeu de paramètres d'exploration qui diffère du premier jeu de paramètres d'exploration.

13. Dispositif selon la revendication 12, **caractérisé en ce que** l'équipement de commande (5) est configuré de manière à régler comme paramètres d'exploration une ou plusieurs grandeurs réglantes sélectionnées dans le groupe suivant de grandeurs réglantes : une vitesse d'exploration, une durée d'exposition à la lumière, une intensité lumineuse de test des rayons lumineux de test, un facteur d'amplification de l'équipement détecteur (4) et une alimentation des zones d'analyse (21 ; 41 ; 51) en énergie électrique.

14. Dispositif selon la revendication 12 ou 13, **caractérisé en ce que** l'équipement de commande (5) est configuré de manière à maintenir constants au moins un paramètre d'exploration pour le premier et le deuxième jeu de paramètres d'exploration.

15. Dispositif selon l'une quelconque des revendications 12 à 14, **caractérisé en ce que** l'équipement de commande (5) est configuré de manière à faire passer des paramètres d'exploration conformes au premier jeu de paramètres d'exploration aux paramètres d'exploration conformes au deuxième jeu de paramètres d'exploration au cours d'une opération d'exploration continue pour l'élément de test chimique sec (1 ; 20 ; 30 ; 50).

16. Dispositif selon l'une quelconque des revendications 12 à 15, **caractérisé en ce que** l'équipement de commande (5) est configuré de manière à provoquer le passage des paramètres d'exploration conformes au premier jeu de paramètres d'exploration aux paramètres d'exploration conformes au deuxième jeu de paramètres d'exploration en fonction d'informations de mesure dérivées d'une opération d'exploration préliminaire réalisée au préalable.

17. Dispositif selon l'une quelconque des revendications 12 à 16, **caractérisé en ce que** l'équipement de commande (5) est configuré de manière à provoquer le passage des paramètres d'exploration conformes au premier jeu de paramètres d'exploration aux paramètres d'exploration conformes au deuxième jeu de paramètres d'exploration en fonction d'informations de mesure actuelles dérivées de valeurs de mesure actuelles lors de l'exploration optique de l'élément de test chimique sec (1 ; 20 ; 30 ; 50).

18. Dispositif selon l'une quelconque des revendications 12 à 17, **caractérisé en ce que** l'équipement de commande (5) est configuré de manière à provoquer à plusieurs reprises, lors de l'exploration optique de l'élément de test chimique sec (1 ; 20 ; 30 ; 50), le passage des paramètres d'exploration conformes au premier jeu de paramètres d'exploration aux paramètres d'exploration conformes au deuxième jeu de paramètres d'exploration et vice versa.

19. Dispositif selon l'une quelconque des revendications 12 à 18, **caractérisé en ce que** l'équipement de commande (5) est configuré de manière à ce que, après l'exploration optique avec les paramètres d'exploration conformes au premier jeu de paramètres d'exploration, il explore de nouveau la première zone d'analyse avec les paramètres d'exploration conformes au deuxième jeu de paramètres d'exploration.

20. Dispositif selon l'une quelconque des revendications 12 à 19, **caractérisé en ce que** l'équipement de commande (5) est configuré de manière à former lors de l'exploration optique des zones d'analyse des zones d'incidence de rayons lumineux de test (31, 32) non chevauchantes affectées aux différentes zones d'analyse.

21. Dispositif selon l'une quelconque des revendications 12 à 20, **caractérisé en ce que** l'équipement de commande (5) est configuré de manière à choisir la première quantité lumineuse dans une première plage partielle de la plage de travail et la deuxième quantité lumineuse dans une deuxième plage partielle de la plage de travail qui diffère de la première plage partielle.

22. Dispositif selon l'une quelconque des revendications 12 à 21, **caractérisé en ce que** l'équipement de commande (5) et l'équipement détecteur (4) sont configurés de manière à, dans une position d'exploration, explorer optiquement plusieurs zones d'analyse (41) similaires et les saisir en surfaces restituées.

23. Dispositif selon l'une quelconque des revendications 12 à 22, **caractérisé par** une source lumineuse (3) configurée de manière à générer des rayons lumineux de test et à les diriger sur des zones d'analyse (21 ; 41 ; 51) de l'élément de test chimique sec (1 ; 20 ; 30 ; 50) dans le logement (2).

24. Dispositif selon l'une quelconque des revendications 12 à 23, **caractérisé par** un équipement à électrodes qui peut être couplé aux zones d'analyse (21 ; 41 ; 51) et est configuré de manière à alimenter les zones d'analyse (21 ; 41 ; 51) de l'élément de test chimique sec (1 ; 20 ; 30 ; 50) en énergie électrique.

25. Utilisation d'un procédé selon l'une quelconque des revendications 1 à 11 ou d'un dispositif selon l'une quelconque des revendications 12 à 24 pour la réalisation d'un test de diagnostic médical, en particulier d'un test immunologique.
